# EUROPEAN PATENT SPECIFICATION

(11) **EP 2 159 133 B1**
(45) Date of publication and mention of the grant of the patent: **03.07.2013**
(21) Application number: 09168831.7
(22) Date of filing: 27.08.2009
(51) Int. Cl.: B62D 5/04

(54) **Electric power steering apparatus**
Elektrische Servolenkung
Appareil de direction assistée électrique

(30) Priority: 29.08.2008 JP 2008221522
(43) Date of publication of application: 03.03.2010
(73) Proprietor: JTEKT CORPORATION, Osaka-shi Osaka 542-8502 (JP)
(72) Inventor: Nishiyama, Akihiro, Osaka-shi, Osaka 542-8502 (JP)
(74) Representative: TBK

(56) References cited:
- EP-A1- 1 621 446
- EP-A2- 1 864 886
- DE-A1- 10 031 215
- DE-A1- 10 128 068
- US-A1- 2008 199 160
- US-B1- 6 266 591

## Description

### 1. Field of the Invention

The invention relates to an electric power steering apparatus that assists steering using an assist force generated by a motor.

### 2. Description of the Related Art

Document US 2008/0199160 A1 shows an electric power steering apparatus as defined in the preamble in claim 1. In particular, the electric power steering apparatus comprises a motor and a motor driving circuit operated by pulse width modulation (PWM). According to this document, it is aimed to detect a stroke end strike at an early timing, and to restrain the occurrence of an excessive torque within the electric power steering apparatus

Document DE 100 31 215 A1 discloses a controller for an electrical power steering system which uses an assist motor, wherein measures are provided to decrease the current of the assist motor.

Document DE 101 28 068 A1 discloses an electrical power steering system including an overload protection.

Document US 6,266,591 B1 discloses a controller for an electric power assisted steering system, wherein a current limit is set based on the vehicle speed.

Documents EP 1 864 886 A2 and document EP 1 621 446 A1 show further examples for an electric power steering apparatus.

An electric power steering apparatus described in Japanese Patent Application Publication No. 2001-151135 ( JP-A-2001-151135 ) is known as an electric power steering apparatus that assists steering using an assist force generated by a motor. In the electric power steering apparatus, if a motor current flowing into an assist motor becomes an overcurrent, for example, when steering is performed and steered wheels are brought to a maximum steering state where the steered wheels cannot be steered any more during steering (that is, when a wheel steering angle is increased to the maximum steering angle), the current supplied to the assist motor is decreased to avoid the situation where an excessive current flows into the assist motor and a drive circuit for the assist motor for a long period.

In a so-called column assist electric power steering apparatus where the torque of the assist motor is transmitted to a column, when a steering wheel is turned so that the wheel steering angle is increased to the maximum steering angle, and the assist motor, which has rotated at high speed, is suddenly stopped, an excessive load acts on a steering system such as an intermediate shaft disposed between the steered wheels and the assist motor, due to the inertia torque of the assist motor corresponding to the rotation speed of the motor immediately before the wheel steering angle reaches the maximum steering angle. Even when the current supplied to the assist motor is decreased after the current becomes an overcurrent, since the assist motor has already been stopped suddenly, it is not possible to prevent an excessive load from acting on the steering system. Particularly in a high-torque electric power steering apparatus, an excessive load acting on the steering system is further increased due to a torque caused by inertia of the motor, because, for example, the output of the assist motor is increased, and the speed reduction ratio of a speed reducer is increased. If the strength of the steering system, such as the intermediate shaft, is increased, other problems occur, for example, the weight of a product is increased, and production cost is increased.

### SUMMARY OF THE INVENTION

An object of the invention is to provide an electric power steering apparatus that solves the above-described problem.

This object is solved by an electric power steering apparatus as defined in claim 1.

The electric power steering apparatus includes an assist motor that assists a steering operation of a steering system, a drive circuit that outputs a voltage to the assist motor, a controller that controls the drive circuit, and a motor current detector that detects a motor current that flows into the assist motor. When the controller determines that the motor current exceeds a predetermined threshold value at which it is determined that a wheel steering angle approaches a maximum steering angle while a vehicle is stopped, the controller decreases the duty ratio.

The drive circuit outputs the voltage corresponding to the duty ratio of the PWM signal to the assist motor by controlling electric power supplied from the direct-current power supply, through PWM. When the controller that controls the drive circuit determines that the motor current exceeds the predetermined threshold value at which it is determined that the wheel steering angle approaches the maximum steering angle while the vehicle is stopped, the controller decreases the duty ratio.

When the wheel steering angle approaches the maximum steering angle due to the steering operation of the steering wheel, a torque required for steering assistance is increased, and the motor current flowing into the assist motor is increased. Thus, the predetermined threshold value is set to a current value at which it is determined that the wheel steering angle approaches the maximum steering angle while the vehicle is stopped. When the motor current exceeds the predetermined threshold value, the duty ratio of the PWM signal in the PWM control is decreased. Thus, the voltage output from the drive circuit to the assist motor is decreased. Therefore, it is possible to decrease the rotation speed of the assist motor, and to decrease a steering speed when the wheel steering angle is increased to the maximum steering angle. Accordingly, it is possible to suppress a load acting on an element of a steering system such as an intermediate shaft when the wheel steering angle is increased to the maximum steering angle.

In the above-described aspect, when the controller determines that the motor current exceeds the predetermined threshold value, the controller decreases the predetermined threshold value based on the vehicle speed. When the vehicle is traveling, the torque required for steering assistance is small as compared to when the vehicle is stopped. Therefore, if the motor current does not exceed the predetermined threshold value set in the above-described manner when the wheel steering angle approaches the maximum steering angle, it is not possible to appropriately decrease the rotation speed of the assist motor. Thus, by decreasing the predetermined threshold value based on the vehicle speed as described above, it is possible to appropriately decrease the rotation speed of the assist motor when the wheel steering angle is increased to the maximum steering angle, even while the vehicle is traveling.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a configuration diagram showing an example of the entire configuration of an electric power steering apparatus according to an embodiment of the invention;
FIG. 2 is a circuit block diagram showing an example of the electric configuration of an ECU and the like;
FIG. 3 is a control block diagram showing the outline of a control executed by the ECU;
FIG. 4 is a flowchart showing the flow of a duty limit value setting process executed by the ECU;
FIG. 5 is a diagram showing an example of a vehicle speed - shaft force correction current value map used for the duty limit value setting process;
FIG. 6 is a diagram showing the relation between a vehicle speed and a rack end shaft force;
FIG. 7 is a diagram showing an example of a determination current value - duty limit value map used for the duty limit value setting process; and
FIG. 8 is a diagram showing the relation between a rack shaft force and a steering speed.

### DETAILED DESCRIPTION OF EMBODIMENTS

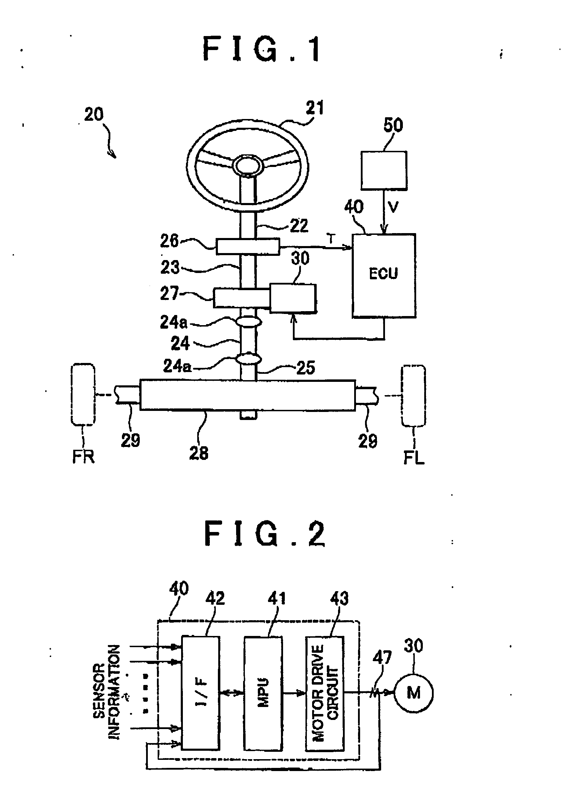

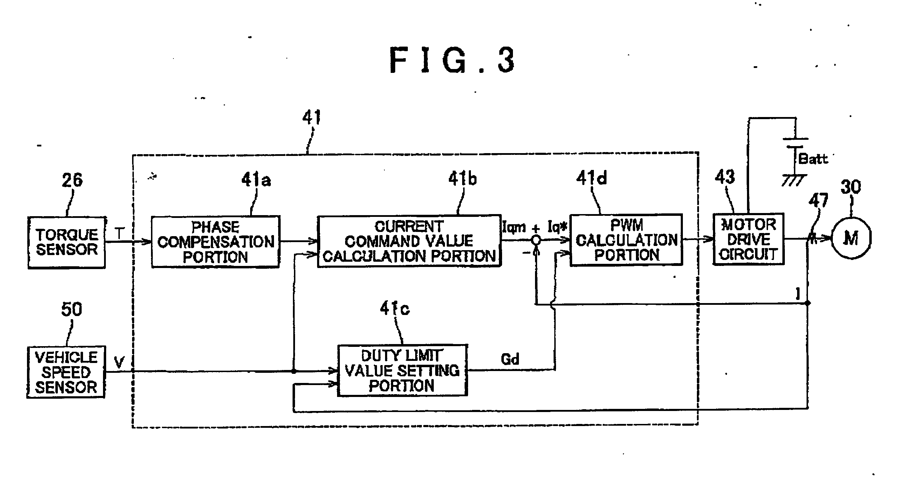

Hereinafter, each embodiment of the invention will be described with reference to the accompanying drawings. The configuration of an electric power steering apparatus according to an embodiment of the invention will be described with reference to FIG. 1 and FIG. 2. FIG. 1 is a configuration diagram showing an example of the entire configuration of an electric power steering apparatus 20 according to the embodiment of the invention. FIG. 2 is a circuit block diagram showing an example of the electric configuration of an ECU 40 and the like. FIG. 3 is a control block diagram showing the outline of a control executed by the ECU 40.

As shown in FIG. 1, the electric power steering apparatus 20 is a column assist electric power steering apparatus that includes a steering wheel 21, a steering shaft 22, a middle shaft 23, an intermediate shaft 24, a pinion input shaft 25, a torque sensor 26, a speed reducer 27, a rack and pinion 28, a rod 29, an assist motor 30, the ECU40, and the like.

One end side of the steering shaft 22 is connected to the steering wheel 21. The input side of the torque sensor 26 is connected to the other end side of the steering shaft 22. One end side of the middle shaft 23 is connected to the output side of the torque sensor 26. The torque sensor 26 includes a torsion bar (not shown), and two resolvers (not shown) attached to respective sides of the torsion bar in a manner such that the torsion bar is positioned between the resolvers. The torque sensor 26 detects a steering torque T generated by the steering wheel 21, by detecting, for example, the torsion amount of the torsion bar, that is, the amount of torsion between an input side that is one end side of the torsion bar, and an output side that is the other end side of the torsion bar, using the two resolvers.

The speed reducer 27 is connected to a portion of the middle shaft 23 connected to the output side of the torque sensor 26. An assist force output from the assist motor 30 is transmitted to the middle shaft 23 through the speed reducer 27.

Although not shown, in the speed reducer 27 that functions as a power transmission mechanism, a motor gear fitted to an output shaft of the assist motor 30 engages with a speed reduction gear of the speed reducer 27. When the output shaft of the assist motor 30 rotates, the speed reduction gear of the speed reducer 27 rotates at a predetermined speed reduction ratio. Thus, the drive force (assist force) generated by the assist motor 30 is transmitted to the middle shaft 23.

The intermediate shaft 24 is disposed between the other end side of the middle shaft 23 and one end side of the pinion input shaft 25. The intermediate shaft 24 is connected to the other end side of the middle shaft 23 through a universal joint 24a and the like, and connected to the one end side of the pinion input shaft 25 through another universal joint 24a and the like. The intermediate shaft 24 transmits rotation of the middle shaft 23 to the pinion input shaft 25.

A pinion gear is formed in the other end side of the pinion input shaft 25. The pinion gear engages with a rack groove of a rack shaft (not shown) included in the rack and pinion 28. In the rack and pinion 28, the rotational movement of the opinion input shaft 25 is converted to the linear movement of the rack shaft. Rods 29 are connected to respective ends of the rack shaft. Steered wheels FR and FL are connected to end portions of the respective rods 29 through knuckles (not shown) and the like. When the pinion input shaft 25 rotates, the actual wheel steering angle of the steered wheels FR and FL is changed through the rack and pinion 28, the rods 29, and the like. Therefore, it is possible to steer the steered wheels FR and FL in accordance with the rotation amount and the rotation direction of the pinion input shaft 25.

The electric configuration of the ECU 40 that controls the operation of the assist motor 30 will be described with reference to FIG. 2. As shown in FIG. 2, the ECU 40 mainly includes an MPU 41, an interface IF 42, a motor drive circuit 43, and the like. The interface I/F 42, the motor drive circuit 43, and the like are connected to the MPU 41 through input/output buses. In FIG. 2, a reference numeral 47 denotes a current sensor 47 that detects a motor current value I that is the value of a current that actually flows into the assist motor 30. Sensor information concerning the motor current value I detected by the current sensor 47 is input, as a motor current value signal, to the MPU 41 through the interface I/F 42. A vehicle speed sensor 50 that detects a vehicle speed V of a vehicle is electrically connected to the MPU 41 through the interface I/F 42 (refer to FIG. 1 and FIG. 3).

For example, the MPU 41 includes a microcomputer, semiconductor memory devices (a ROM, a RAM, an EEPROM, and the like). The MPU 41 executes a basic assist motor control for the electric power steering apparatus 20 using a predetermined computer program.

The interface I/F 42 allows sensor signals transmitted from the torque sensor 26, the current sensor 47, the vehicle speed sensor 50, and the like to be input to predetermined ports of the MPU 41 through an A/D converter and the like.

The motor drive circuit 43 converts electric power supplied from a direct-current power supply Batt to three-phase alternate current power that is controllable. The motor drive circuit 43 includes a PWM circuit, a switching circuit, and the like. The PWM circuit is a pulse modulation circuit that generates switching signals that turn on or off switching elements for respective phases in the switching circuit, based on the PWM signals with predetermined duty ratios output from the MPU 41. The generated switching signal is output to the switching circuit. As each switching element included in the switching circuit, for example, a Metal-Oxide Semiconductor Field-Effect Transistor (MOSFET) for high-speed switching is used. Paired switching elements for each phase are totem-pole-connected between the direct-current power supply Batt and the ground.

The ECU 40 shown in FIG. 3 causes the assist motor 30 to generate an assist torque appropriate for a steering state based on the steering torque T detected by the torque sensor 26, the motor current value I detected by the current sensor 47, and the vehicle speed V detected by the vehicle speed sensor 40, by executing an assist force control (described later). Thus, the electric power steering apparatus 20 can assist a driver in steering the vehicle using the steering wheel 21.

The outline of the assist force control executed by the ECU 40 thus configured will be described with reference to FIG. 3. The assist force control executed by the MPU 41 of the ECU 40 includes a phase compensation portion 41a, a current command value calculation portion 41b, a duty limit value setting portion 41c, and a PWM calculation portion 41 d.

When a signal indicating the steering torque T detected by the torque sensor 26 is input to the MPU 41 through the interface I/F 42, the phase compensation portion 41a performs a phase compensation on the signal indicating the steering torque T to increase stability of the electric power steering apparatus 20, and then, outputs the signal indicating the steering torque T to the current command value calculation portion 41b.

The signal indicating the steering torque T, on which the phase compensation has been performed, is input to the current command value calculation portion 41b, and a signal indicating the vehicle speed V detected by the vehicle speed sensor 50 is also input to the current command value calculation portion 41b. Therefore, the current command value calculation portion 41b calculates a target current value Iqm corresponding to the steering torque T and the vehicle speed V, based on an assist map (not shown) stored in the memory of the MPU 41. Since the current command value calculation portion 41b calculates the target current value Iqm corresponding to both of the steering torque T and the vehicle speed V, the current command value calculation portion 41b calculates the target current value Iqm so that, for example, when the vehicle speed V is low, a larger assist force is output, and when the vehicle speed V is high, a smaller assist force is output. That is, the current command value calculation portion 41b performs vehicle-speed-dependent calculation for obtaining the current command value. Then, a motor current command value Iq* based on the difference between the target current value Iqm output from the current command value calculation portion 41b and the motor current value I detected by the current sensor 47 is output to the PWM calculation portion 41d.

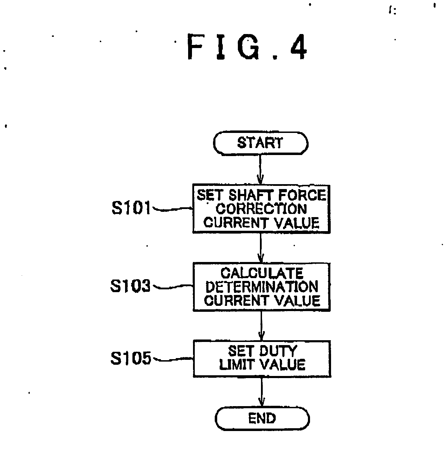

The duty limit value setting portion 41c sets a duty limit value Gd according to the motor current value I and the vehicle speed V as described later, and outputs the duty limit value Gd to the PWM calculation portion 41d. The flow of the process of setting the duty limit value Gd will be described in detail with reference to a flowchart shown in FIG. 4 later.

The PWM calculation portion 41d calculates a voltage command value Vq* corresponding to the motor current command value Iq*. Thus, the PWM signal with a predetermined duty ratio, which is obtained by PWM calculation, is output to the motor drive circuit 43. At this time, the duty-ratio of the PWM signal for the low-voltage switching element of the motor drive circuit 43 is adjusted to a value obtained by multiplying the duty ratio of the high-voltage switching element by the above-described duty limit value Gd.

In the motor drive circuit 43, the switching elements for the phases are turned on or off based on the PWM signals for the respective phases output from the PWM calculation portion 41d. Thus, the motor drive circuit 43 converts direct-current power supplied from the direct-current power supply Batt to predetermined three-phase alternate current power, thereby controlling the operation of the assist motor 30. Accordingly, the motor drive circuit 43 causes the assist motor 30 to generate an appropriate force.

Particularly when the duty limit value Gd is set to a value smaller than 1, the duty ratio of the low-voltage switching element is limited, and is decreased. As a result, the voltage supplied to the assist motor 30 is decreased, and therefore, the rotation speed of the assist motor 30 is decreased.

When the steering wheel 21 is turned so that a wheel steering angle is increased to the maximum steering angle, and the assist motor 30, which has rotated at high speed, is suddenly stopped, a rotation force corresponding to the inertia torque of the assist motor 30 acts on an element of the steering system such as the intermediate shaft 24 disposed between the steered wheels FR and FL and the assist motor 30, as an excessive load.

When the wheel steering angle approaches the maximum steering angle due to the steering operation of the steering wheel 21, a force for moving the rack shaft (hereinafter, referred to as "rack shaft force F") according to the steering operation is increased, and therefore, a torque required for steering assistance is increased. Accordingly, the motor current I flowing into the assist motor 30 is increased. Thus, a predetermined current threshold value It is set to a current value at which it is determined that the wheel steering angle approaches the maximum steering angle while the vehicle is stopped. When the motor current value I exceeds the current threshold value It, a PWM control is executed by outputting the PWM signal whose duty ratio is decreased by multiplying the duty ratio by the duty limit value Gd that is set to a value smaller than 1. Thus, the voltage output from the motor drive circuit 43 to the assist motor 30 is decreased. Therefore, it is possible to decrease the rotation speed of the assist motor 30 when the wheel steering angle is increased to the maximum steering angle.

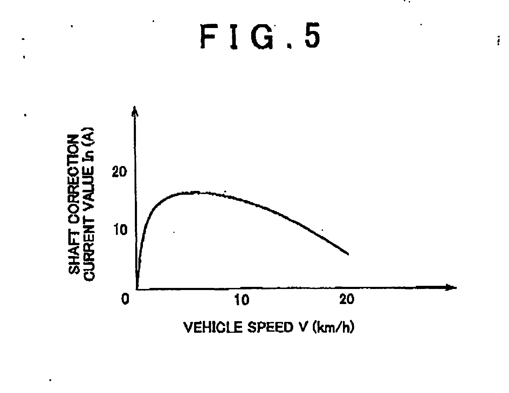

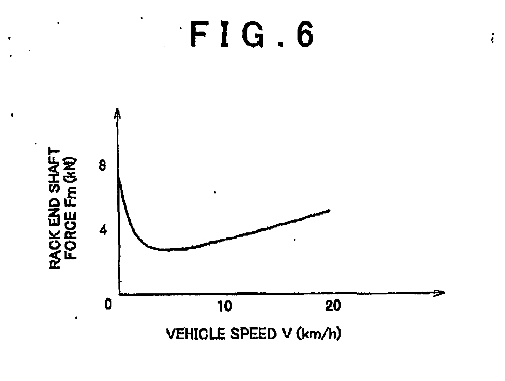

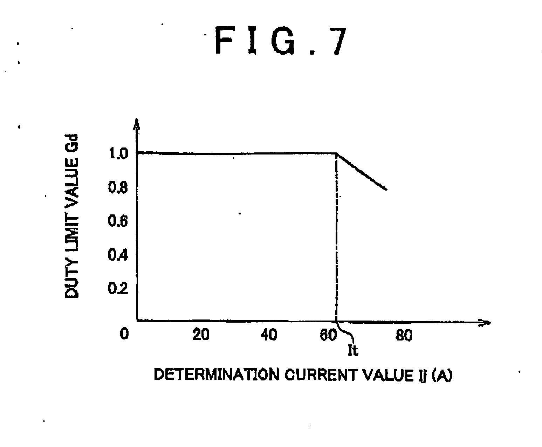

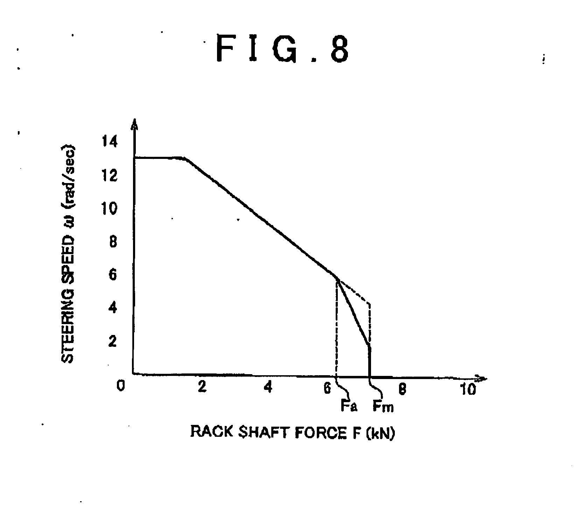

Hereinafter, the process of setting the duty limit value Gd will be described in detail with reference to the flowchart shown in FIG. 4. FIG. 4 is the flowchart showing the flow of the duty limit value setting process executed by the ECU 40. FIG. 5 is a diagram showing an example of a vehicle speed - shaft force correction current value map used for the duty limit value setting process. FIG. 6 is a diagram showing the relation between the vehicle speed V and a rack end shaft force Fm. FIG. 7 is a diagram showing an example of a determination current value - duty limit value map used for the duty limit value setting process. FIG. 8 is a diagram showing the relation between the rack shaft force F and a steering speed ω.

First, in step S101 in FIG. 4, the process of setting a shaft force correction current value In is executed. In this process, the shaft force correction current value In corresponding to the vehicle speed V is set based on the vehicle speed - shaft force correction current value map in FIG. 5. Hereinafter, the reason for setting the shaft force correction current value In will be described.

As shown in FIG. 6, the rack shaft force when the wheel steering angle reaches the maximum steering angle (hereinafter, may be referred to as "rack end shaft force Fm") decreases while the vehicle is traveling, as compared to while the vehicle is stopped (i.e., while the vehicle speed V is 0 km /h). Accordingly, the torque required for steering assistance is small while the vehicle is traveling, as compared to while the vehicle is stopped. Therefore, the motor current value I is small while the vehicle is traveling, as compared to while the vehicle is stopped. As a result, if the motor current value I does not exceed the current threshold value It when the wheel steering angle approaches the maximum steering angle, it is not possible to appropriately decrease the rotation speed of the assist motor 30, as described below.

Thus, a current to be supplied to the assist motor 30 to eliminate the difference between the rack end shaft force Fm when the vehicle is stopped, and the rack end shaft force Fm when the vehicle is traveling (hereinafter, the current may be also referred to as "the shaft force correction current value In") is determined according to the vehicle speed V. In addition, the relation between the shaft force correction current value In and the vehicle speed V is set and stored in advance, in the form of the vehicle speed - shaft force correction current value map shown in FIG. 5. In the embodiment, the rack end shaft force Fm when the vehicle is stopped is set to, for example, 7kN.

The shaft force correction current value In is determined based on the vehicle speed V using the vehicle speed - shaft force correction current value map. Then, a current value for determination (hereinafter, referred to as "determination current value") Ij obtained by adding the shaft force correction current value In to the motor current value I is compared with the above-described current threshold value It. Thus, by decreasing the current threshold value It with respect to the motor current value I when the vehicle is traveling, it is possible to appropriately decrease the rotation speed of the assist motor 30 when the wheel steering angle is increased to the maximum steering angle, even while the vehicle is traveling.

After the shaft force correction current value In is set in step S101, the determination current value Ij is calculated by adding the shaft force correction current value In to the motor current value I detected by the current sensor 47 in step S103.

Next, in step S105, the process of setting the duty limit value Gd is executed. In the process, the duty limit value Gd corresponding to the determination current value Ij is set based on the determination current value - duty limit value map shown in FIG. 7. Hereinafter, the reason for setting the duty limit value Gd will be described.

As shown in FIG. 8, when the wheel steering angle approaches the maximum steering angle due to the steering operation of the steering wheel 21 while the vehicle is stopped, the torque required for steering assistance increases, and therefore, the rack shaft force F increases. On the other hand, the steering speed ω during the steering operation of the steering wheel 21 decreases. When the rack shaft force F is sufficiently smaller than the rack end shaft force Fm, there is no possibility that the wheel steering angle is increased to the maximum steering angle. Therefore, it is not necessary to adjust the steering speed ω. However, if it is determined that the rack shaft force F increases according to the steering operation of the steering wheel 21, and the wheel steering angle approaches the maximum steering angle, it is necessary to decrease the steering speed ω to prevent an excessive load from acting on the steering system when the wheel steering angle is increased to the maximum steering angle. On the other hand, when the steering speed ω needs to be equal to or higher than the minimum steering speed, for example, when the steering speed ω needs to be equal to or higher than 2 rad/sec immediately before the wheel steering angle reaches the maximum steering angle, it is not possible to simply decrease the steering speed ω.

Thus, when the rack shaft force F exceeds a high rack shaft force Fa, the steering speed ω is decreased. The high rack shaft force Fa is the rack shaft force F at which it is determined that the wheel steering angle approaches the maximum steering angle. That is, when the rack shaft force F exceeds the high rack shaft force Fa, the steering speed ω is decreased by decreasing the rotation speed of the assist motor 30 (refer to FIG. 8). In the embodiment, the high rack shaft force Fa is set to, for example, 6kN.

More specifically, the current threshold value I is set to the motor current value when the rack shaft force F is equal to the high rack shaft force Fa while the vehicle is stopped. Therefore, when it is determined that the determination current value Ij is equal to or smaller than the current threshold value It, the duty limit value Gd is set to 1 as shown in FIG. 7. When it is determined that the determination current value Ij exceeds the current threshold value It, the duty limit value Gd is set to decreases from 1 at a predetermined decrease rate, in order to decrease the rotation speed of the assist motor 30 to decrease the steering speed ω. In the embodiment, the current threshold value It is set to, for example, 60A.

As described above, when the steering speed ω needs to be equal to or higher than the minimum steering speed, for example, immediately before the wheel steering angle reaches the maximum steering angle, the value of the duty limit value Gd, which corresponds to the minimum steering speed, is determined in advance through calculation or the like. The predetermined decrease rate is adjusted so that the duty limit value Gd is equal to or larger than the value corresponding to the minimum steering speed, for example, immediately before the wheel steering angle reaches the maximum steering angle.

After the duty limit value Gd is set in the above-described duty limit value setting process, the PWM signal with a predetermined duty ratio is output to the high-voltage switching element of the motor drive circuit 43, and the PWM signal with a duty ratio, which is obtained by multiplying the predetermined duty ratio by the duty limit value Gd, is output to the low-voltage switching element.

Thus, when it is determined that the wheel steering angle approaches the maximum steering angle, the duty limit value Gd is set to a value smaller than 1, and accordingly, the duty ratio of the low-voltage switching element is limited, and is decreased. Thus, the voltage supplied to the assist motor 30 is decreased. Therefore, when the wheel steering angle is increased to the maximum steering angle, the rotation speed of the assist motor 30 is decreased, and the steering speed ω is also decreased. As a result, it is possible to suppress a load acting on the steering system such as the intermediate shaft 24 when the wheel steering angle is increased to the maximum steering angle. Thus, it is possible to prevent breakage of the steering system due to the steering operation that increases the wheel steering angle to the maximum steering angle.

As described above, in the electric power steering apparatus 20 according to the embodiment, the motor drive circuit 43 outputs the voltage corresponding to the duty ratio of the PWM signal, to the assist motor 30 by controlling the electric power supplied from the direct-current power supply Batt through PWM. When the MPU 41 that controls the motor drive circuit 43 determines that the determination current value Ij obtained by adding the shaft force correction current value In to the motor current I exceeds the current threshold value It, the MPU 41 decreases the duty ratio of the low-voltage switching element of the motor drive circuit 43 by multiplying the duty ratio by the duty limit value Gd. Thus, when the MPU 41 performs this determination, the MPU 41 increases the shaft force correction current value In based on the vehicle speed V of the vehicle.

As a result, the voltage output from the motor drive circuit 43 to the assist motor 30 is decreased. Thus, when the wheel steering angle is increased to the maximum steering angle, it is possible to decrease the rotation speed of the assist motor 30, and to decrease the steering speed ω. Accordingly, when the wheel steering angle is increased to the maximum steering angle, it is possible to suppress a load acting on the steering system such as the intermediate shaft 24.

In the electric power steering apparatus 20 according to the embodiment, the determination current value Ij obtained by adding the shaft force correction current value In set according to the vehicle speed V to the motor current value I is compared with the current threshold value It. Therefore, when the vehicle is traveling, the current threshold value It is decreased with respect to the motor current value I. Thus, it is possible to appropriately decrease the rotation speed of the assist motor 30 when the wheel steering angle is increased to the maximum steering angle, even while the vehicle is traveling.

The invention is not limited to the above-described embodiment. The invention may be realized in the following embodiments. In the following embodiments as well, it is possible to obtain the advantageous effects as those obtained in the above-described embodiment. (1) The invention is not limited to the configuration in which in the determination current value - duty limit value map in FIG. 7, the duty limit value Gd is set to decrease from 1 at the predetermined decrease rate when the determination current value Ij exceeds the current threshold value It. For example, the duty limit value Gd may be set to decrease from 1 in a stepwise manner when the determination current value Ij exceeds the current threshold value It. The duty limit value Gd may be set to be equal to a value smaller than 1 when the determination current value Ij exceeds the current threshold value It.

(2) The PWM calculation portion 41d may limit and decrease the duty ratios of both of the low-voltage switching element and the high-voltage switching element, by multiplying the duty ratio of the high-voltage switching element by the duty limit value Gd, as well as multiplying the duty ratio of the low-voltage switching element by the duty limit value Gd. In this case as well, when the wheel steering angle is increased to the maximum steering angle, the voltage supplied to the assist motor 30 is decreased, and therefore, it is possible to decrease the rotation speed of the assist motor 30.
A motor drive circuit (43) outputs a voltage corresponding to a duty ratio of a PWM signal, to an assist motor (30) by controlling electric power supplied from a direct-current power supply (Batt) through PWM. When an MPU (41) that controls the motor drive circuit (43) determines that a determination current value (Ij) obtained by adding a shaft force correction current value (In) to a motor current (I) exceeds a current threshold value (It), the MPU (41) decreases the duty ratio of a low-voltage switching element of the motor drive circuit (43) by multiplying the duty ratio by a duty limit value (Gd). When the MPU (41) performs the determination, the MPU (41) increases the shaft force correction current value (In) based on the vehicle speed (V) of the vehicle.

## Claims

1. An electric power steering apparatus comprising:
an assist motor (**30**) that assists a steering operation of a steering system of a vehicle;
a drive circuit (**43**) that outputs a voltage corresponding to a duty ratio of a pulse width modulation signal, to the assist motor by controlling electric power supplied from a direct-current power supply, through pulse width modulation;
a controller (**41**) that controls the drive circuit; and
a motor current detector (**47**) that detects a motor current that flows into the assist motor,
**characterized in that,**
when the controller determines that the detected motor current exceeds a predetermined threshold value at which it is determined that a wheel steering angle approaches a maximum steering angle while a vehicle is stopped, the controller decreases the duty ratio of the pulse width modulation signal in correspondence to which the drive circuit outputs the voltage.

2. The electric power steering apparatus according to claim 1, further comprising:
a vehicle speed detector (**50**) that detects a vehicle speed,
wherein when the controller (**41**) determines that the motor current exceeds the predetermined threshold value, the controller decreases the predetermined threshold value with an increase of the vehicle speed.

## Patentansprüche

1. Elektrisches Servolenkgerät mit
einem Unterstützungsmotor (**30**), der einen Lenkvorgang eines Lenksystems eines Fahrzeugs unterstützt,
einer Antriebsschaltung (**43**), die eine Spannung entsprechend einem Tastverhältnis eines Impulsbreitenmodulationssignals zu dem Unterstützungsmotor durch Steuerung ausgibt, indem aus einer Gleichstromleistungsversorgung zugeführte elektrische Leistung durch Impulsbreitenmodulation gesteuert wird,
einer Steuerungseinrichtung (**41**), die die Antriebsschaltung steuert,
einer Motorstromerfassungseinrichtung (**47**), der einen in den Unterstützungsmotor fließenden Motorstrom erfasst,
**dadurch gekennzeichnet, dass,**
wenn die Steuerungseinrichtung bestimmt, dass der erfasste Motorstrom einen vorbestimmten Schwellwert überschreitet, bei dem bestimmt wird, dass ein Radlenkwinkel sich einem maximalen Lenkwinkel annähert, während ein Fahrzeug gestoppt ist, die Steuerungseinrichtung das Tastverhältnis des Impulsbreitenmodulationssignals verringert, entsprechend dem die Antriebsschaltung die Spannung ausgibt.

2. Elektrisches Servolenkgerät nach Anspruch 1, weiterhin mit
einer Fahrzeuggeschwindigkeitserfassungseinrichtung (**50**), die eine Fahrzeuggeschwindigkeit erfasst,
wobei, wenn die Steuerungseinrichtung (**41**) bestimmt, dass der Motorstrom den vorbestimmten Schwellwert überschreitet, die Steuerungseinrichtung den vorbestimmten Schwellwert mit einem Anstieg der Fahrzeuggeschwindigkeit verringert.

## Revendications

1. Appareil de direction assistée électrique comprenant :
un moteur d'assistance (30) qui assiste une opération de direction d'un système de direction d'un véhicule ;
un circuit d'entraînement (43) qui délivre en sortie une tension correspondant à un rapport cyclique d'un signal de modulation d'impulsions en largeur, au moteur d'assistance en commandant une énergie électrique fournie par une alimentation électrique en courant continu, par une modulation d'impulsions en largeur ;
un dispositif de commande (41) qui commande le circuit d'entraînement ; et
un détecteur de courant de moteur (47) qui détecte un courant de moteur qui circule dans le moteur d'assistance,
**caractérisé en ce que**,
lorsque le dispositif de commande détermine que le courant de moteur détecté dépasse une valeur seuil prédéterminée à laquelle il est déterminé qu'un angle de braquage de roue s'approche d'un angle de braquage maximal pendant qu'un véhicule est arrêté, le dispositif de commande diminue le rapport cyclique du signal de modulation d'impulsions en largeur en correspondance avec lequel le circuit d'entraînement délivre en sortie la tension.

2. Appareil de direction assistée électrique selon la revendication 1, comprenant en outré :
un détecteur de vitesse de véhicule (50) qui détecte une vitesse de véhicule,
dans lequel lorsque le dispositif de commande (41) détermine que le courant de moteur dépasse la valeur seuil prédéterminée, le dispositif de commande diminue la valeur seuil prédéterminée avec une augmentation de la vitesse du véhicule.
